# EUROPEAN PATENT SPECIFICATION

(11) **EP 3 104 584 B1**
(45) Date of publication and mention of the grant of the patent: **07.03.2018**
(21) Application number: 16165281.3
(22) Date of filing: 14.04.2016
(51) Int. Cl.: H04M 1/2745

(54) **DATA SYNCHRONIZATION BETWEEN AN IN-VEHICLE COMPUTING DEVICE AND A MOBILE DEVICE**
DATENSYNCHRONISATION ZWISCHEN EINER FAHRZEUGINTERNEN RECHENVORRICHTUNG UND EINER MOBILEN VORRICHTUNG
SYNCHRONISATION DE DONNÉES ENTRE UN DISPOSITIF DE CALCUL DANS UN VÉHICULE ET UN DISPOSITIF PORTABLE

(30) Priority: 09.06.2015 US 201514735033
(43) Date of publication of application: 14.12.2016
(73) Proprietor: Harman International Industries, Incorporated, Stamford, CT 06901 (US)
(72) Inventor: SHANBHAG, Sandeep, 560102 Bangalore (IN)
(74) Representative: Grünecker Patent- und Rechtsanwälte PartG mbB

(56) References cited:
- EP-A2- 2 672 685
- US-A1- 2015 140 976

## Description

### FIELD

The disclosure relates to synchronizing phonebook data from devices, such as smartphones and tablets, acting as a source to other devices, such as in-vehicle-infotainment devices, acting as a sync using Wi-Fi Direct as the transport link between the devices.

### BACKGROUND

Data synchronization between devices may occur via a wired connection (e.g., using a universal serial bus [USB] cable, Ethernet cable, or other wired medium) or a proximity-based wireless communication medium (e.g., a BLUETOOTH or a near-field communication (NFC) link). However, wired connections may be inconvenient due to the cabling used for the connection, and may not be available in some scenarios (e.g., when a wired port is not available on one or both devices, or when a cable is missing). Proximity-based wireless communication via BLUETOOTH, NFC, or similar may suffer from low data rates, short communication ranges, and low tolerance to interference, causing slow data transfer and frequent disconnects. Furthermore, utilizing a BLUETOOTH connection for data transfer during data synchronization may utilize all available bandwidth on the BLUETOOTH medium, preventing the user from performing other BLUETOOTH tasks, such as hands-free calling in a mobile phone, music streaming to a wireless speaker, etc.
European patent application EP 2 672 685 A2 relates to a mobile terminal and a method for operating the same. The method for operating the mobile terminal includes displaying on the mobile terminal a remote control screen for remotely controlling an image display apparatus, entering a wireless audio reception mode if a wireless audio reception mode start signal is received during the displaying of the remote control screen, and displaying on the mobile terminal a wireless audio reception mode screen.

### SUMMARY OF THE INVENTION

It is an object of the present invention to provide a method and an apparatus that obviate or mitigate at least one of the disadvantages and shortcomings of the related prior art. This object is solved by the present invention as claimed in the appended independent claims. Particular embodiments of the present invention are defined by the appended dependent claims.

Embodiments are disclosed for performing phonebook synchronization between two devices. In one example embodiment, an in-vehicle computing system of a vehicle includes a wireless communication interface, a processor, and a storage device storing instructions executable by the processor to initiate a connection to a mobile device over a WIFI direct communication link, the in-vehicle computing system being established as a group owner of the WIFI direct communication link and the mobile device being established as a group client of the WIFI direct communication link. The instructions may further be executable to assign an IP address to the mobile device based on an IP address of the in-vehicle computing system, identify the in-vehicle computing system as a sink for synchronization of phonebook data communicated over the WIFI direct communication link, and selectively receive the synchronization data from the mobile device over the WIFI direct communication link in accordance with transmission control protocol (TCP) or user datagram protocol (UDP) based on an amount or format of the synchronization data to be transmitted.

In additional or alternative embodiments, an example mobile computing device includes a wireless communication interface, a processor, a storage device storing phonebook data as a plurality of vCards, and storing instructions executable by the processor to request to connect to a remote computing device via a WIFI direct communication link, encrypt at least a portion of the phonebook data according to one or more of Layer-2 protocol and a Layer-3 protocol of an Open Systems Interconnection (OSI) model, and negotiate to identify which of the remote computing device and the mobile computing device is to provide an access point for the WIFI direct communication link. The instructions are further executable to, responsive to determining that the remote computing device provides the access point, receive an IP address assignment from the remote computing device, for each of the plurality of vCards that are to be transmitted individually, transmitting that vCard to the remote computing device according to user datagram protocol (UDP), and for each of the plurality of vCards that are to be transmitted collectively as a file, transmitting that file to the remote computing device according to transmission control protocol (TCP).

An example method of synchronizing phonebook data between a first device and a second device includes establishing a connection between the first device and the second device over a WIFI direct communication link, and determining if one of the first device and the second device transmitted a beacon advertising an access point provided by the one of the first device and the second device. The method further includes, if one of the first device and the second device transmitted the beacon, identifying the one of the first device and the second device as the access point for the WIFI direct communication link, and if neither or both of the first device and the second device transmitted the beacon, negotiating which device is identified as the access point according to a protocol of Layer-2 of an Open Systems Interconnection (OSI) model of the first and second devices. The method further includes assigning, by the device identified as the Group Owner, an IP address for the device not identified as the access point, determining whether the phonebook data is to be sent as individual vCards or as one or more files including a plurality of vCards, communicating the phonebook data across the WIFI direct communication link using UDP if the phonebook data is to be sent as individual vCards, and communicating the phonebook data across the WIFI direct communication link using TCP if the phonebook data is to be sent as one or more files including a plurality of vCards.

### BRIEF DESCRIPTION OF THE DRAWINGS

The disclosure may be better understood from reading the following description of non-limiting embodiments, with reference to the attached drawings, wherein below:
FIG. 1 shows an example partial view of a vehicle cabin in accordance with one or more embodiments of the present disclosure;
FIG. 2 shows an example in-vehicle computing system in accordance with one or more embodiments of the present disclosure;
FIG. 3 shows an example method of performing phonebook synchronization over WIFI direct in accordance with one or more embodiments of the present disclosure;
FIG. 4 shows an example mobile device including an example data synchronization application architecture in accordance with one or more embodiments of the present disclosure;
FIG. 5 shows an example method of synchronizing data between a mobile device and an in-vehicle computing system in accordance with one or more embodiments of the present disclosure; and
FIG. 6 shows an example method of synchronizing phonebook data between a mobile device and an in-vehicle computing system in accordance with one or more embodiments of the present disclosure.

### DETAILED DESCRIPTION

In order to overcome the issues of performing phonebook synchronization over BLUETOOTH and related proximity-based wireless communication media (e.g., low data transfer rates, short ranges, etc.), the disclosure provides example systems and methods for performing phonebook synchronization over WIFI direct. Communication over WIFI direct can leverage on the standard TCP/IP based communication compared to BLUETOOTH protocol stack. In this way, WIFI direct communication has increased compatibility with multiple platforms and operating systems relative to BLUETOOTH communication. Phonebook Synchronizing via WIFI direct takes advantage of this compatibility and ease of application development, as well as the increased data rates of WIFI direct (e.g., up to 600 Mbps or up to 1 Gbps with WIFI direct versus approximately 1 to 3 Mbps with BLUETOOTH). Additionally, phonebook synchronizing over WIFI direct enables other communication to be performed via a BLUETOOTH connection during the synchronization.

In one illustrative example, data synchronization may be performed between a mobile device (e.g., a smartphone) and an in-vehicle computing system in order to synchronize contacts in the mobile device with contacts in the in-vehicle computing system. For example, a user may utilize the in-vehicle computing system to make hands-free phone calls while in the vehicle. Synchronizing contacts between the user's phone and the in-vehicle computing system allows the user to go directly through the in-vehicle computing system to make calls, instead of searching the phone for contact information, then entering the contact information into the in-vehicle computing system.

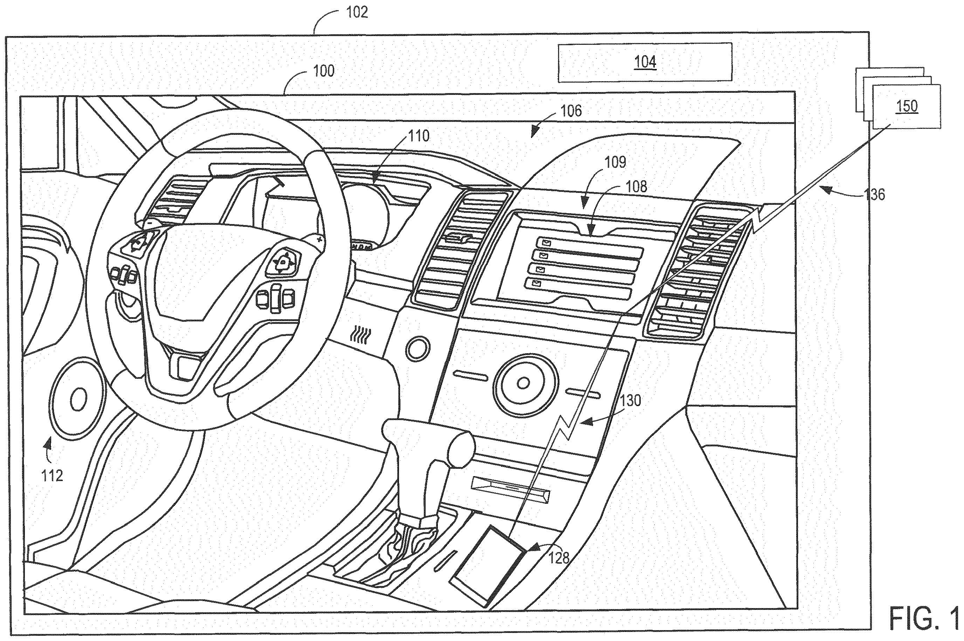

FIG. 1 shows an example partial view of one type of environment for a communication system for data synchronization: an interior of a cabin 100 of a vehicle 102, in which a driver and/or one or more passengers may be seated. Vehicle 102 of FIG. 1 may be a motor vehicle including drive wheels (not shown) and an internal combustion engine 104. Internal combustion engine 104 may include one or more combustion chambers which may receive intake air via an intake passage and exhaust combustion gases via an exhaust passage. Vehicle 102 may be a road automobile, among other types of vehicles. In some examples, vehicle 102 may include a hybrid propulsion system including an energy conversion device operable to absorb energy from vehicle motion and/or the engine and convert the absorbed energy to an energy form suitable for storage by an energy storage device. Vehicle 102 may include a fully electric vehicle, incorporating fuel cells, solar energy capturing elements, and/or other energy storage systems for powering the vehicle.

As shown, an instrument panel 106 may include various displays and controls accessible to a driver (also referred to as the user) of vehicle 102. For example, instrument panel 106 may include a touch screen 108 of an in-vehicle computing system 109 (e.g., an infotainment system), an audio system control panel, and an instrument cluster 110. While the example system shown in FIG. 1 includes audio system controls that may be performed via a user interface of in-vehicle computing system 109, such as touch screen 108 without a separate audio system control panel, in other embodiments, the vehicle may include an audio system control panel, which may include controls for a conventional vehicle audio system such as a radio, compact disc player, MP3 player, etc. The audio system controls may include features for controlling one or more aspects of audio output via speakers 112 of a vehicle speaker system. For example, the in-vehicle computing system or the audio system controls may control a volume of audio output, a distribution of sound among the individual speakers of the vehicle speaker system, an equalization of audio signals, and/or any other aspect of the audio output. In further examples, in-vehicle computing system 109 may adjust a radio station selection, a playlist selection, a source of audio input (e.g., from radio or CD or MP3), etc., based on user input received directly via touch screen 108, or based on data regarding the user (such as a physical state and/or environment of the user) received via external devices 150 and/or mobile device 128.

In some embodiments, one or more hardware elements of in-vehicle computing system 109, such as touch screen 108, a display screen, various control dials, knobs and buttons, memory, processor(s), and any interface elements (e.g., connectors or ports) may form an integrated head unit that is installed in instrument panel 106 of the vehicle. The head unit may be fixedly or removably attached in instrument panel 106. In additional or alternative embodiments, one or more hardware elements of the in-vehicle computing system may be modular and may be installed in multiple locations of the vehicle.

The cabin 100 may include one or more sensors for monitoring the vehicle, the user, and/or the environment. For example, the cabin 100 may include one or more seat-mounted pressure sensors configured to measure the pressure applied to the seat to determine the presence of a user, door sensors configured to monitor door activity, humidity sensors to measure the humidity content of the cabin, microphones to receive user input in the form of voice commands, to enable a user to conduct telephone calls, and/or to measure ambient noise in the cabin 100, etc. It is to be understood that the above-described sensors and/or one or more additional or alternative sensors may be positioned in any suitable location of the vehicle. For example, sensors may be positioned in an engine compartment, on an external surface of the vehicle, and/or in other suitable locations for providing information regarding the operation of the vehicle, ambient conditions of the vehicle, a user of the vehicle, etc. Information regarding ambient conditions of the vehicle, vehicle status, or vehicle driver may also be received from sensors external to/separate from the vehicle (that is, not part of the vehicle system), such as sensors coupled to external devices 150 and/or mobile device 128.

Cabin 100 may also include one or more user objects, such as mobile device 128, that are stored in the vehicle before, during, and/or after travelling. The mobile device 128 may include a smart phone, a tablet, a laptop computer, a portable media player, and/or any suitable mobile computing device. The mobile device 128 may be connected to the in-vehicle computing system via communication link 130. The communication link 130 may be wired (e.g., via Universal Serial Bus [USB], Mobile High-Definition Link [MHL], High-Definition Multimedia Interface [HDMI], Ethernet, etc.) or wireless (e.g., via BLUETOOTH, WIFI, WIFI direct Near-Field Communication [NFC], cellular connectivity, etc.) and configured to provide two-way communication between the mobile device and the in-vehicle computing system. The mobile device 128 may include one or more wireless communication interfaces for connecting to one or more communication links (e.g., one or more of the example communication links described above). The wireless communication interface may include one or more physical devices, such as antenna(s) or port(s) coupled to data lines for carrying transmitted or received data, as well as one or more modules/drivers for operating the physical devices in accordance with other devices in the mobile device. For example, the communication link 130 may provide sensor and/or control signals from various vehicle systems (such as vehicle audio system, climate control system, etc.) and the touch screen 108 to the mobile device 128 and may provide control and/or display signals from the mobile device 128 to the in-vehicle systems and the touch screen 108. The communication link 130 may also provide power to the mobile device 128 from an in-vehicle power source in order to charge an internal battery of the mobile device.

In-vehicle computing system 109 may also be communicatively coupled to additional devices operated and/or accessed by the user but located external to vehicle 102, such as one or more external devices 150. In the depicted embodiment, external devices are located outside of vehicle 102 though it will be appreciated that in alternate embodiments, external devices may be located inside cabin 100. The external devices may include a server computing system, personal computing system, portable electronic device, electronic wrist band, electronic head band, portable music player, electronic activity tracking device, pedometer, smart-watch, GPS system, etc. External devices 150 may be connected to the in-vehicle computing system via communication link 136 which may be wired or wireless, as discussed with reference to communication link 130, and configured to provide two-way communication between the external devices and the in-vehicle computing system. For example, external devices 150 may include one or more sensors and communication link 136 may transmit sensor output from external devices 150 to in-vehicle computing system 109 and touch screen 108. External devices 150 may also store and/or receive information regarding contextual data, user behavior/preferences, operating rules, etc. and may transmit such information from the external devices 150 to in-vehicle computing system 109 and touch screen 108.

In-vehicle computing system 109 may analyze the input received from external devices 150, mobile device 128, and/or other input sources and select settings for various in-vehicle systems (such as climate control system or audio system), provide output via touch screen 108 and/or speakers 112, communicate with mobile device 128 and/or external devices 150, and/or perform other actions based on the assessment. In some embodiments, all or a portion of the assessment may be performed by the mobile device 128 and/or the external devices 150.

In some embodiments, one or more of the external devices 150 may be communicatively coupled to in-vehicle computing system 109 indirectly, via mobile device 128 and/or another of the external devices 150. For example, communication link 136 may communicatively couple external devices 150 to mobile device 128 such that output from external devices 150 is relayed to mobile device 128. Data received from external devices 150 may then be aggregated at mobile device 128 with data collected by mobile device 128, the aggregated data then transmitted to in-vehicle computing system 109 and touch screen 108 via communication link 130. Similar data aggregation may occur at a server system and then transmitted to in-vehicle computing system 109 and touch screen 108 via communication link 136/130.

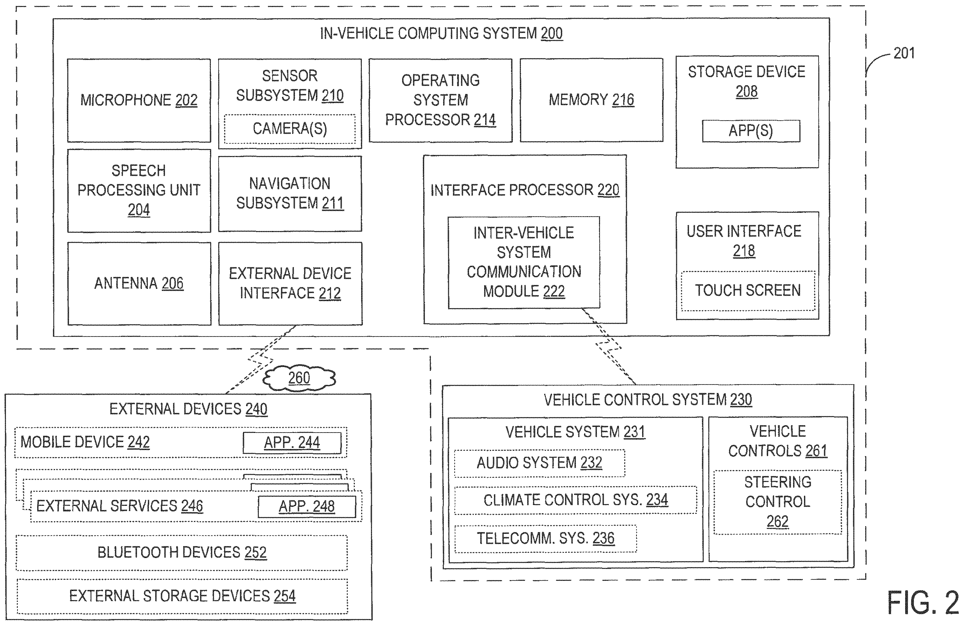

FIG. 2 shows a block diagram of an in-vehicle computing system 200 configured and/or integrated inside vehicle 201. In-vehicle computing system 200 may be an example of in-vehicle computing system 109 of FIG. 1 and/or may perform one or more of the methods described herein in some embodiments. In some examples, the in-vehicle computing system may be a vehicle infotainment system configured to provide information-based media content (audio and/or visual media content, including entertainment content, navigational services, etc.) to a vehicle user to enhance the operator's in-vehicle experience. The vehicle infotainment system may include, or be coupled to, various vehicle systems, sub-systems, hardware components, as well as software applications and systems that are integrated in, or integratable into, vehicle 201 in order to enhance an in-vehicle experience for a driver and/or a passenger.

In-vehicle computing system 200 may include one or more processors including an operating system processor 214 and an interface processor 220. Operating system processor 214 may execute an operating system on the in-vehicle computing system, and control input/output, display, playback, and other operations of the in-vehicle computing system. Interface processor 220 may interface with a vehicle control system 230 via an inter-vehicle system communication module 222.

Inter-vehicle system communication module 222 may output data to other vehicle systems 231 and vehicle control elements 261, while also receiving data input from other vehicle components and systems 231, 261, e.g. by way of vehicle control system 230. When outputting data, inter-vehicle system communication module 222 may provide a signal via a bus corresponding to any status of the vehicle, the vehicle surroundings, or the output of any other information source connected to the vehicle. Vehicle data outputs may include, for example, analog signals (such as current velocity), digital signals provided by individual information sources (such as clocks, thermometers, location sensors such as Global Positioning System [GPS] sensors, etc.), digital signals propagated through vehicle data networks (such as an engine controller area network [CAN] bus through which engine related information may be communicated, a climate control CAN bus through which climate control related information may be communicated, and a multimedia data network through which multimedia data is communicated between multimedia components in the vehicle). For example, the in-vehicle computing system may retrieve from the engine CAN bus the current speed of the vehicle estimated by the wheel sensors, a power state of the vehicle via a battery and/or power distribution system of the vehicle, an ignition state of the vehicle, etc. In addition, other interfacing means such as Ethernet may be used as well without departing from the scope of this disclosure.

A non-volatile storage device 208 may be included in in-vehicle computing system 200 to store data such as instructions executable by processors 214 and 220 in non-volatile form. The storage device 208 may store application data to enable the in-vehicle computing system 200 to run an application for connecting to a cloud-based server and/or collecting information for transmission to the cloud-based server. The application may retrieve information gathered by vehicle systems/sensors, input devices (e.g., user interface 218), devices in communication with the in-vehicle computing system (e.g., a mobile device connected via a Bluetooth link), etc. In-vehicle computing system 200 may further include a volatile memory 216. Volatile memory 216 may be random access memory (RAM). Non-transitory storage devices, such as non-volatile storage device 208 and/or volatile memory 216, may store instructions and/or code that, when executed by a processor (e.g., operating system processor 214 and/or interface processor 220), controls the in-vehicle computing system 200 to perform one or more of the actions described in the disclosure.

A microphone 202 may be included in the in-vehicle computing system 200 to receive voice commands from a user, to measure ambient noise in the vehicle, to determine whether audio from speakers of the vehicle is tuned in accordance with an acoustic environment of the vehicle, etc. A speech processing unit 204 may process voice commands, such as the voice commands received from the microphone 202. In some embodiments, in-vehicle computing system 200 may also be able to receive voice commands and sample ambient vehicle noise using a microphone included in an audio system 232 of the vehicle.

One or more additional sensors may be included in a sensor subsystem 210 of the in-vehicle computing system 200. For example, the sensor subsystem 210 may include a camera, such as a rear view camera for assisting a user in parking the vehicle and/or a cabin camera for identifying a user (e.g., using facial recognition and/or user gestures). Sensor subsystem 210 of in-vehicle computing system 200 may communicate with and receive inputs from various vehicle sensors and may further receive user inputs. For example, the inputs received by sensor subsystem 210 may include transmission gear position, transmission clutch position, gas pedal input, brake input, transmission selector position, vehicle speed, engine speed, mass airflow through the engine, ambient temperature, intake air temperature, etc., as well as inputs from climate control system sensors (such as heat transfer fluid temperature, antifreeze temperature, fan speed, passenger compartment temperature, desired passenger compartment temperature, ambient humidity, etc.), an audio sensor detecting voice commands issued by a user, a fob sensor receiving commands from and optionally tracking the geographic location/proximity of a fob of the vehicle, etc. While certain vehicle system sensors may communicate with sensor subsystem 210 alone, other sensors may communicate with both sensor subsystem 210 and vehicle control system 230, or may communicate with sensor subsystem 210 indirectly via vehicle control system 230. A navigation subsystem 211 of in-vehicle computing system 200 may generate and/or receive navigation information such as location information (e.g., via a GPS sensor and/or other sensors from sensor subsystem 210), route guidance, traffic information, point-of-interest (POI) identification, and/or provide other navigational services for the driver.

External device interface 212 of in-vehicle computing system 200 may be coupleable to and/or communicate with one or more external devices 240 located external to vehicle 201. While the external devices are illustrated as being located external to vehicle 201, it is to be understood that they may be temporarily housed in vehicle 201, such as when the user is operating the external devices while operating vehicle 201. In other words, the external devices 240 are not integral to vehicle 201. The external devices 240 may include a mobile device 242 (e.g., connected via a Bluetooth, NFC, WIFI direct, or other wireless connection) or an alternate Bluetooth-enabled device 252. Mobile device 242 may be a mobile phone, smart phone, wearable devices/sensors that may communicate with the in-vehicle computing system via wired and/or wireless communication, or other portable electronic device(s). Other external devices include external services 246. For example, the external devices may include extra-vehicular devices that are separate from and located externally to the vehicle. Still other external devices include external storage devices 254, such as solid-state drives, pen drives, USB drives, etc. External devices 240 may communicate with in-vehicle computing system 200 either wirelessly or via connectors without departing from the scope of this disclosure. For example, external devices 240 may communicate with in-vehicle computing system 200 through the external device interface 212 over network 260, a universal serial bus (USB) connection, a direct wired connection, a direct wireless connection, and/or other communication link.

The external device interface 212 may provide a communication interface to enable the in-vehicle computing system to communicate with mobile devices associated with contacts of the driver. For example, the external device interface 212 may enable phone calls to be established and/or text messages (e.g., SMS, MMS, etc.) to be sent (e.g., via a cellular communications network) to a mobile device associated with a contact of the driver. The external device interface 212 may additionally or alternatively provide a wireless communication interface to enable the in-vehicle computing system to synchronize data with one or more devices in the vehicle (e.g., the driver's mobile device) via WIFI direct, as described in more detail below.

One or more applications 244 may be operable on mobile device 242. As an example, mobile device application 244 may be operated to aggregate user data regarding interactions of the user with the mobile device. For example, mobile device application 244 may aggregate data regarding music playlists listened to by the user on the mobile device, telephone call logs (including a frequency and duration of telephone calls accepted by the user), positional information including locations frequented by the user and an amount of time spent at each location, etc. The collected data may be transferred by application 244 to external device interface 212 over network 260. In addition, specific user data requests may be received at mobile device 242 from in-vehicle computing system 200 via the external device interface 212. The specific data requests may include requests for determining where the user is geographically located, an ambient noise level and/or music genre at the user's location, an ambient weather condition (temperature, humidity, etc.) at the user's location, etc. Mobile device application 244 may send control instructions to components (e.g., microphone, etc.) or other applications (e.g., navigational applications) of mobile device 242 to enable the requested data to be collected on the mobile device. Mobile device application 244 may then relay the collected information back to in-vehicle computing system 200.

Likewise, one or more applications 248 may be operable on external services 246. As an example, external services applications 248 may be operated to aggregate and/or analyze data from multiple data sources. For example, external services applications 248 may aggregate data from one or more social media accounts of the user, data from the in-vehicle computing system (e.g., sensor data, log files, user input, etc.), data from an internet query (e.g., weather data, POI data), etc. The collected data may be transmitted to another device and/or analyzed by the application to determine a context of the driver, vehicle, and environment and perform an action based on the context (e.g., requesting/sending data to other devices).

Vehicle control system 230 may include controls for controlling aspects of various vehicle systems 231 involved in different in-vehicle functions. These may include, for example, controlling aspects of vehicle audio system 232 for providing audio entertainment to the vehicle occupants, aspects of climate control system 234 for meeting the cabin cooling or heating needs of the vehicle occupants, as well as aspects of telecommunication system 236 for enabling vehicle occupants to establish telecommunication linkage with others.

Audio system 232 may include one or more acoustic reproduction devices including electromagnetic transducers such as speakers. Vehicle audio system 232 may be passive or active such as by including a power amplifier. In some examples, in-vehicle computing system 200 may be the only audio source for the acoustic reproduction device or there may be other audio sources that are connected to the audio reproduction system (e.g., external devices such as a mobile phone). The connection of any such external devices to the audio reproduction device may be analog, digital, or any combination of analog and digital technologies.

Climate control system 234 may be configured to provide a comfortable environment within the cabin or passenger compartment of vehicle 201. Climate control system 234 includes components enabling controlled ventilation such as air vents, a heater, an air conditioner, an integrated heater and air-conditioner system, etc. Other components linked to the heating and air-conditioning setup may include a windshield defrosting and defogging system capable of clearing the windshield and a ventilation-air filter for cleaning outside air that enters the passenger compartment through a fresh-air inlet.

Vehicle control system 230 may also include controls for adjusting the settings of various vehicle controls 261 (or vehicle system control elements) related to the engine and/or auxiliary elements within a cabin of the vehicle, such as steering wheel controls 262 (e.g., steering wheel-mounted audio system controls, cruise controls, windshield wiper controls, headlight controls, turn signal controls, etc.), instrument panel controls, microphone(s), accelerator/brake/clutch pedals, a gear shift, door/window controls positioned in a driver or passenger door, seat controls, cabin light controls, audio system controls, cabin temperature controls, etc. Vehicle controls 261 may also include internal engine and vehicle operation controls (e.g., engine controller module, actuators, valves, etc.) that are configured to receive instructions via the CAN bus of the vehicle to change operation of one or more of the engine, exhaust system, transmission, and/or other vehicle system. The control signals may also control audio output at one or more speakers of the vehicle's audio system 232. For example, the control signals may adjust audio output characteristics such as volume, equalization, audio image (e.g., the configuration of the audio signals to produce audio output that appears to a user to originate from one or more defined locations), audio distribution among a plurality of speakers, etc. Likewise, the control signals may control vents, air conditioner, and/or heater of climate control system 234. For example, the control signals may increase delivery of cooled air to a specific section of the cabin.

Control elements positioned on an outside of a vehicle (e.g., controls for a security system) may also be connected to computing system 200, such as via communication module 222. The control elements of the vehicle control system may be physically and permanently positioned on and/or in the vehicle for receiving user input. In addition to receiving control instructions from in-vehicle computing system 200, vehicle control system 230 may also receive input from one or more external devices 240 operated by the user, such as from mobile device 242. This allows aspects of vehicle systems 231 and vehicle controls 261 to be controlled based on user input received from the external devices 240.

In-vehicle computing system 200 may further include an antenna 206. Antenna 206 is shown as a single antenna, but may comprise one or more antennas in some embodiments. The in-vehicle computing system may obtain broadband wireless internet access via antenna 206, and may further receive broadcast signals such as radio, television, weather, traffic, and the like. The in-vehicle computing system may receive positioning signals such as GPS signals via one or more antennas 206. The in-vehicle computing system may also receive wireless commands via RF such as via antenna(s) 206 or via infrared or other means through appropriate receiving devices. In some embodiments, antenna 206 may be included as part of audio system 232 or telecommunication system 236. Additionally, antenna 206 may provide AM/FM radio signals to external devices 240 (such as to mobile device 242) via external device interface 212.

One or more elements of the in-vehicle computing system 200 may be controlled by a user via user interface 218. User interface 218 may include a graphical user interface presented on a touch screen, such as touch screen 108 of FIG. 1, and/or user-actuated buttons, switches, knobs, dials, sliders, etc. For example, user-actuated elements may include steering wheel controls, door and/or window controls, instrument panel controls, audio system settings, climate control system settings, and the like. A user may also interact with one or more applications of the in-vehicle computing system 200 and mobile device 242 via user interface 218. In addition to receiving a user's vehicle setting preferences on user interface 218, vehicle settings selected by in-vehicle control system may be displayed to a user on user interface 218. Notifications and other messages (e.g., received messages), as well as navigational assistance, may be displayed to the user on a display of the user interface. User preferences/information and/or responses to presented messages may be performed via user input to the user interface.

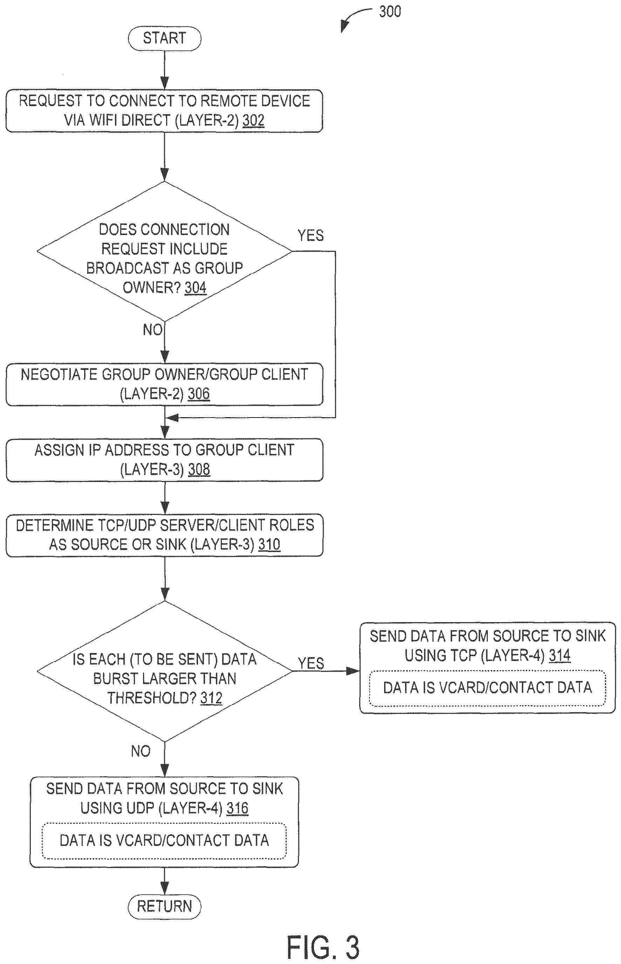

FIG. 3 is a flow chart of an example method 300 for synchronizing data between two devices. For example, method 300 may be performed by the in-vehicle computing system 109 and/or mobile device 128 of FIG. 1. At 302, method 300 includes requesting to connect to a remote device via WIFI direct. The request may be performed at the data link layer (Layer-2 of the Open Systems Interconnection [OSI] model) of the requesting device. Using the phone contacts synchronization example above, it is to be understood that the in-vehicle computing system may be the requesting device while the user's phone may be the remote device, or the user's phone may be the requesting device while the in-vehicle computing system may be the remote device.

At 304, the method includes determining if the connection request includes a broadcast in which the requesting device advertises itself as the group owner for the WIFI direct communication. A group owner of the WIFI direct communication link may represent a device that is capable of (and assigned to) serve as an access point (AP) on the WIFI direct communication link. A group client of the WIFI direct communication link serves as an enrolled station (STA) of the access point on the WIFI direct communication link. If the connection request does not advertise the group owner (e.g., "NO" at 304), the method proceeds to 306 to negotiate which device is the group owner and which device is the group client for the communication. The negotiation may include determining capabilities of each device (e.g., available bandwidth/on-going communications, available computing resources, etc.), analyzing historical data regarding prior roles of each device as a group owner or group client, and/or performing other suitable evaluations. The negotiation may additionally or alternatively include determining information about the data to be transferred/synchronized (e.g., the type, size, and/or content of the data). In some examples, the negotiation may additionally or alternatively include determining which device is the requesting device (e.g., which device requested the WIFI direct connection) and assigning that device as the group owner (or group client, in other embodiments). The selection of each respective device as a group owner or a group client may be based on any one or combination of the above determinations.

Here to simplify the connection establishment and avoid WIFI direct (WFD) Negotiation Procedure the application may provide pre-defined roles depending on role of the Phonebook Synchronization to remain configurable for different synchronization scenarios. Roles may be predefined as a Phonebook Sync Device (In-Car-Infotainment Kit) plays the role of WFD-Group Owner (which is like an Access Point) and a Phonebook Source Device (smartphones, tablets, etc.) plays the role of WFD-Group Client. In adherence to these roles, during connection the WFD-Group Client may identify the WFD-Group Owner and directly connect, thereby avoiding WFD Negotiation Procedure. Although the avoidance of the negotiation is illustrated in FIG. 3 as occurring responsive to a determination that the connection request includes a broadcast indicating that the broadcasting device is a group owner, it is to be understood that the negotiation may be avoided based on the pre-defined roles outlined above (e.g., based upon an identification of a device as performing a pre-defined role). Upon negotiating which device is the group owner/client or if the group owner is already determined based on a broadcast request (e.g., "YES" at 304), the method continues to 308 to assign an IP address to the group client. For example, the device designated as the group owner may assign the IP address to the group client. The IP address assigned to the group client may be selected as an IP address that is in the same subnet as the IP address of the group owner. The assignment of IP addresses may be performed at the network layer (Layer-3 of the OSI model) of the device that performs the assignment.

At 310, the method includes, at Layer-3 of the devices, determining TCP/User Datagram Protocol (UDP) server/client roles as a source or a sink. Continuing with the phone contact synchronization described above, the user's phone may be viewed as a master device, whereby the contact information on the user's phone is used to populate/synchronize contact information at the in-vehicle computing system. In such an example, the user's phone may be a TCP/UDP client device that is a data source, while the in-vehicle computing system may be a TCP/UDP server device that is a data sink.

At 312, the method includes determining if each to-be-sent data burst is larger than a threshold. For example, if contact information is being synchronized, the to-be-sent data burst may correspond to the number of vCards (e.g., contact information files including contact information; some vCards may include only contact information for a single contact/entity such that each vCard represents an entry in a user's contact list) to be transmitted at a time. In one example, the threshold may correspond to sending each vCard individually (e.g., one at a time, such that each vCard is sent successively/consecutively), such that the data burst is larger than the threshold if the vCards are collected into one or more files (e.g., compressed files), including multiple vCards from the user's phone, to be sent to the in-vehicle computing system. In the file-based example, the phone may send the data one file at a time, such that the data burst is a file of multiple vCards. If the data is sent one vCard at a time, the data burst may correspond to a single vCard and may not exceed the threshold. It is to be understood that the threshold may correspond to a different measurement of data, such as a packet or file size of to-be-transmitted data, an amount of data to be sent per a designated unit of time, and/or any other suitable measurement of data. The data may be determined to be sent as individual vCards based on the amount of data being sent during synchronization. For example, if more than a threshold total amount of synchronization data is to be sent, the vCards may be grouped into compressed files and transmitted as such. Conversely, if less than the threshold total amount of synchronization data is to be sent, the vCards may be sent individually. In some examples, some vCards may be sent individually, while others are grouped together (e.g., based on the size of the vCards, such that larger vCards are sent individually and smaller vCards are sent in groups). In such examples, each transmission (e.g., each vCard or file including multiple vCards) may be sent according to TCP/UDP as described below in some embodiments. In other embodiments, a default transmission protocol may be utilized when vCards and files of vCards are sent in one WIFI direct session (e.g., such that a session is defined as the time between a connection and a disconnection of a WIFI direct communication link between two devices).

If the to-be-sent data burst is larger than the threshold (e.g., "YES" at 312), the method proceeds to 314 to send data from the source to the sink using TCP as the transport layer (Layer-4 of the OSI model) protocol of the source device. If the to-be-sent data is not larger than the threshold (e.g., "NO" at 312), the method proceeds to 316 to send data from the source to the sink using UDP as the Layer-4 protocol of the source device. In either case, (e.g., sending data according to TCP or UDP), the data may include vCard/contact data that is synchronized between a mobile phone and an in-vehicle computing system in some examples. It is to be understood that any suitable data may be synchronized between any suitable devices in other examples. For example, images, documents, audio and/or video data, user/configuration/settings data, and/or any other suitable types of data or combination of types of data may be transmitted between any two computing devices in accordance with method 300.

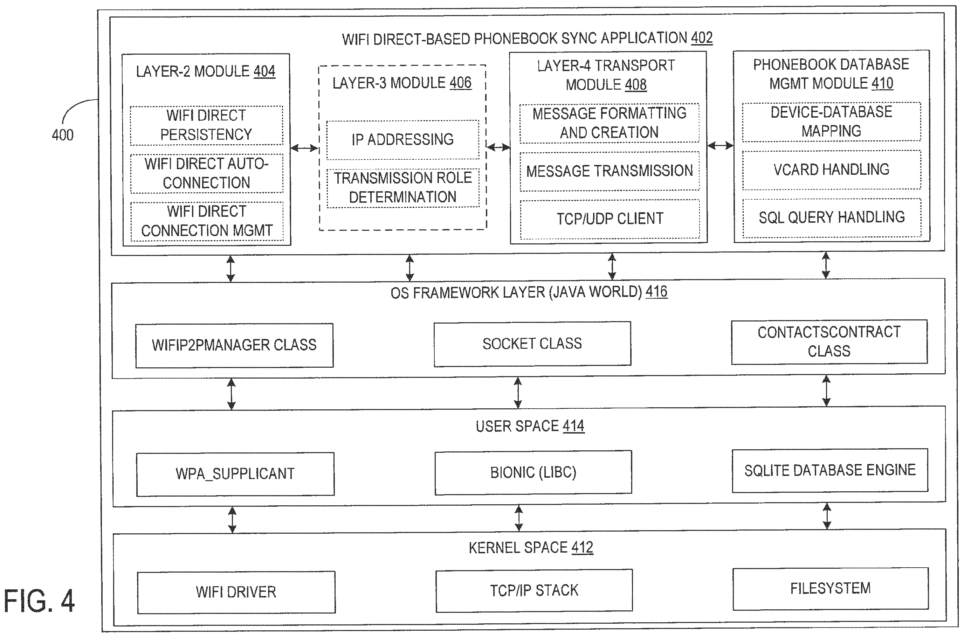

Method 300 may be performed at one or both devices by executing an application in the device(s). For example, instructions stored on the devices may be executed by a respective processor in combination with one or more other hardware devices (e.g., communication interfaces/antennas, user input devices, etc.) to perform method 300. An example architecture of a data synchronization application 402, as stored in a computing device 400, is illustrated in FIG. 4. For example, computing device 400 may correspond to in-vehicle computing system 109 and/or mobile device 128 of FIG. 1 and/or any other suitable computing device. It is to be understood that although the application 402 is directed toward phonebook synchronization, the application may be used for other data synchronization, such that phonebook-related modules may be replaced or supplemented by other data-related modules.

As illustrated in FIG. 4, a WIFI direct-based phonebook synchronization application includes a Layer-2 module 404 for handling operations that occur using the data link layer of the computing device 400. For example, the Layer-2 module 404 may include a WIFI direct persistency module, a WIFI direct auto-connection module, and a WIFI direct connection management module for enabling WIFI direct connection information to be stored and accessed for subsequent connections. When a device first connects to another device via WIFI direct, the connections may be maintained by storing credentials for each device at both devices. At a later time, the devices may automatically connect to one another without user intervention (e.g., when one device comes into range of the other device) by using the stored data to automatically authenticate each other and configure the connection. The automatic connection may enable the devices to automatically synchronize data at regular intervals and/or responsive to a trigger (e.g., upon connection to one another) by performing an automatic/fast reconnect.

The application 402 may also include a Layer-3 module 406 including IP addressing and transmission role determination modules (e.g., if the computing device 400 includes modules for serving as an access point for WIFI direct communication and/or is otherwise able to serve as a group owner in WIFI direct communication). The Layer-3 module may be utilized to perform the Layer-3 elements of method 300 of FIG. 3. Likewise, Layer-4 transport module 408 may be utilized to perform the Layer-4 elements of method 300. For example, Layer-4 module 408 may include a message formatting and creation module, a message transmission module, and a TCP/UDP client module to ensure data transmission occurs in accordance with the appropriate Layer-4 protocol (e.g., TCP for larger data and UDP for smaller data, as described above with respect to element 312 of FIG. 3).

Application 402 includes phonebook database management module 410, which may provide instructions and/or modules related to retrieving, organizing, transmitting, and/or otherwise managing contacts for the computing device 400 via a device-database mapping module, a vCard handling module, an SQL query handling module, and/or any other suitable module. The contacts may be stored on the computing device in some embodiments. In additional or alternative embodiments, the contacts may be stored in a remote computing or storage device and the computing device 400 may store a pointer to the memory location of the remote computing or storage device in which the contacts are stored. The phonebook database management module 410 may analyze phonebook data at the computing device 400 as well as phonebook data at a remote device with which the computing device 400 is to be synchronized, in order to compare data in each device. The phonebook database management module 410 may identify differences in the phonebook data of each device, such as vCards that are present in one of the devices and not present in the other device and vCards that include different data in the different devices.

The WIFI direct-based phonebook sync application 402 may communicate with and utilize resources from the computing device 400, such as the WIFI driver, TCP/IP stack, and filesystem from the kernel space 412 of the device (e.g., the Linux kernel space for a mobile device and/or in-vehicle computing system), the WPA_Supplicant cross-platform supplicant, Bionic C library code, and SQLite data base engine from the user space 414 of the device (e.g., the Linux user space), and the WIFIP2PMANAGER class, socket class, Contacts Contract class, and/or other suitable class definitions from the operating system framework layer 416 of the device (e.g., the ANDROID framework layer). The elements in the kernel space, user space, and OS framework layer may be used to execute instructions provided by the modules of the application 402 by providing building blocks to define and interpret the instructions of the application so as to control elements of the computing device 400 (e.g., to perform data synchronization with another device).

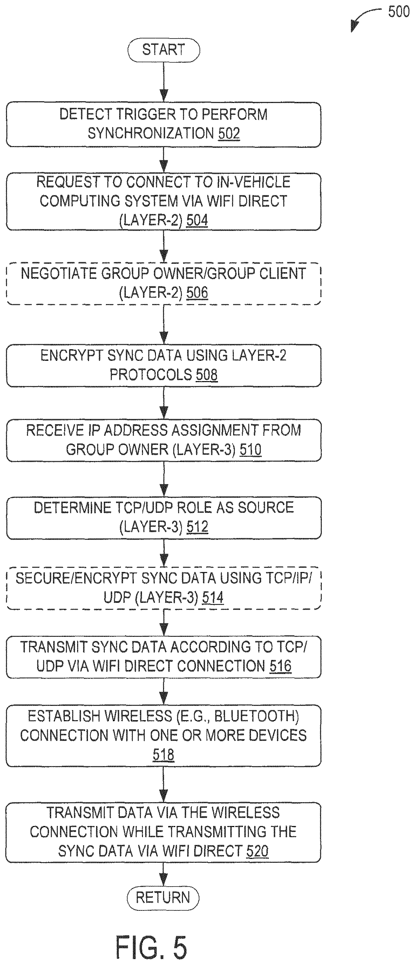

FIG. 5 is a flow chart of an example method 500 for performing data synchronization of a mobile device (e.g., mobile device 128 of FIG. 1) with an in-vehicle computing device (e.g., in-vehicle computing system 109 of FIG. 1). For example, method 500 may be performed by executing an application (e.g., WIFI direct-based phonebook synchronization application 402 of FIG. 4) in a mobile device, which may include executing instructions with a processor of the mobile device in combination with one or more hardware elements of the mobile device (e.g., an antenna/communication interface, a user input device, a display, etc.). At 502, method 500 includes detecting a trigger to perform data synchronization. For example, the trigger may include a manual (e.g., user-initiated or user-input related) trigger or an automatic trigger (e.g., initiated and/or performed without user intervention or request). An example manual trigger may include a user selecting an option on a user interface of the mobile device in order to initiate data synchronization (e.g., to synchronize the contacts of the mobile device with those of the in-vehicle computing system). An example automatic trigger may include initiating data synchronization responsive to an event without user intervention or input. The event may include two devices coming within WIFI direct range of one another, two devices successfully connecting with one another in a wired or wireless manner (e.g., over a communication protocol other than WIFI direct), detecting a change in the to-be-synchronized data, detecting a first-time connection to another device, and/or any other suitable event or combination of events. In such an automatic example, the method may proceed to 504 responsive to detecting the event and without user input, request, or other involvement.

At 504, the method includes requesting to connect to an in-vehicle computing system via WIFI direct. For example, the mobile device may send a message (e.g., WIFI management frames) to the in-vehicle computing system indicating an intent to connect via WIFI direct and including device information about the mobile device (e.g., authentication information, device capabilities, etc.). In other examples, requesting to connect to an in-vehicle computing system may include detecting a broadcast from the in-vehicle computing system advertising the ability of the in-vehicle computing system to serve as an access point for a WIFI direct connection and establishing a peer-to-peer connection with the in-vehicle computing system as an enrollee station of the in-vehicle computing system's access point. In order to connect to the in-vehicle computing system, the mobile device may complete a WIFI Protected Setup, using a push-button, PIN-based, or other authentication routine to securely connect to the in-vehicle computing system. The request to connect to the in-vehicle computing system may be performed at Layer-2 of the mobile device.

At 506, the method may include negotiating which device is the group owner and which device is the group client. For example, the negotiation may be performed as described at 306 of FIG. 3. If one of the devices (e.g., the in-vehicle computing system) sent a broadcast advertising that device as a wireless access point for WIFI direct communications, that device may be automatically assigned as a group owner and the connecting device as a group client. At 508, the method includes encrypting data using Layer-2 protocols. It is to be understood that any suitable Layer-2 security technique may be performed at 506. At 510, the method includes receiving an IP address assignment from the group owner (e.g., the in-vehicle computing system). As described above with respect to FIG. 3, the IP address for the mobile device may be selected by the in-vehicle computing system to match a subnet of the IP address of the in-vehicle computing system. The mobile device and the in-vehicle computing system may store the assigned IP addresses mapped to the respective devices in order to address communication between the devices. At 512, the method includes determining that the TCP/UDP role of the mobile device is a data source, and the TCP/UDP role of the in-vehicle computing system is a data sink. Accordingly, when synchronizing data, data is sent from the source (e.g., the mobile device) to the sink (e.g., the in-vehicle computing system). In some examples, only data that is different (e.g., data, such as vCards, that is included in the mobile device but is not included in the in-vehicle computing system) is transmitted from the mobile device to the in-vehicle computing system in order to conserve bandwidth usage.

At 514, the method may include securing and/or encrypting data according to Layer-3 protocol(s) (e.g., TCP/IP/UDP). In this way, data may be encrypted on two levels (e.g., at the data link layer and the network layer) in order to increase security of the data. It is to be understood that only a portion of the data may be encrypted according to Layer-2 and/or Layer-3 protocol(s) in some examples. In other examples, all of the data (e.g., all phonebook data of a mobile device) may be encrypted according to Layer-2, all of the data may be encrypted according to Layer-3 protocol(s), or all of the data may be encrypted according to both Layer-2 and Layer-3 protocol(s). For example, phonebook data of a mobile device may be encrypted at Layer-2 using Standard WPA2 Security Mechanism and additionally at the IP Layer using an IPSec Security mechanism. At 516, the method includes transmitting the synchronization data (e.g., the encrypted phonebook data) from the mobile device to the in-vehicle computing system according to TCP/UDP (e.g., as described at 312-316 of FIG. 3) via the WIFI direct connection.

At 518, the method includes establishing a wireless connection between the mobile device and one or more other devices, which may include the in-vehicle computing system and/or additional devices other than the in-vehicle computing system (e.g., another mobile device, a portable speaker, a cloud storage device, etc.). It is to be understood that the wireless connection may be established at any point during or before performing method 500 and may include establishing a wireless connection via BLUETOOTH, NFC, and/or any other suitable wireless protocol. At 520, the method includes transmitting data via the wireless connection while transmitting the synchronization data via WIFI direct. In this way, data (which may be the synchronization data and/or other data) may be transmitted via WIFI and via another wireless communication protocol/medium (e.g., BLUETOOTH, NFC, etc.) simultaneously. It is to be understood that the method may additionally or alternatively include sending additional data other than the synchronization data via the same WIFI direct connection and/or via a WIFI direct connection to a different device (e.g., other than the in-vehicle computing system). The simultaneous transmission via WIFI direct and another wireless communication protocol and/or the simultaneous transmission of synchronization and other data via WIFI direct may be performed at the mobile device and/or the in-vehicle computing system. For example, the in-vehicle computing system may synchronize data with two mobile devices simultaneously via WIFI direct and/or via WIFI direct and another wireless protocol (e.g., BLUETOOTH, NFC, etc.). Synchronization data and other data may be sent simultaneously over the same link to the same device by performing a multiplexing technique, such as time-division multiplexing or frequency-division multiplexing.

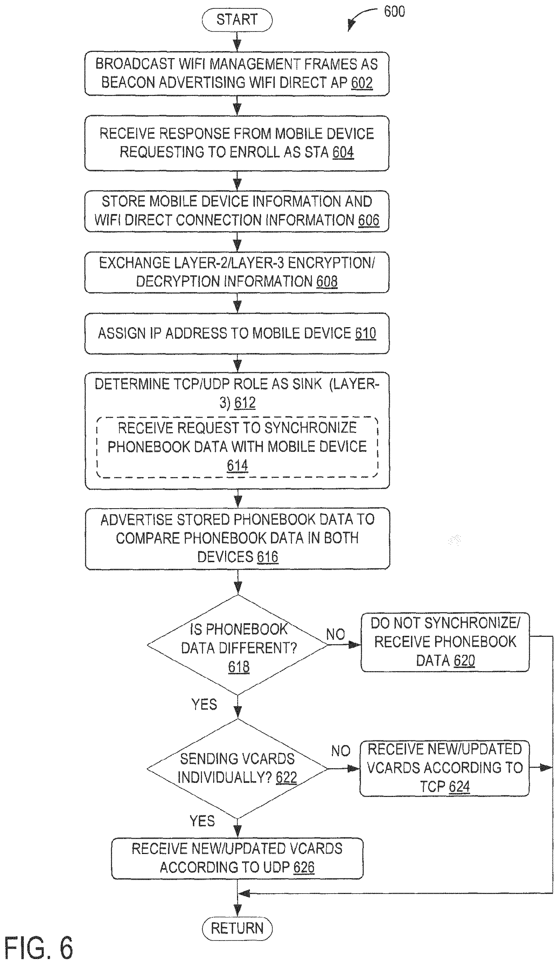

FIG. 6 is a flow chart of an example method 600 for synchronizing phonebook data between an in-vehicle computing system and a mobile device. Method 600 may be performed by an in-vehicle computing system, such as in-vehicle computing system 109 of FIG. 1. At 602, the method includes broadcasting WIFI management frames as a beacon advertising the ability of the in-vehicle computing system to serve as a soft-access point (soft-AP) for WIFI direct communications. In this way, the in-vehicle computing system may advertise as an autonomous group owner searching for group clients to communicate via WIFI direct. At 604, the method includes receiving a response from a mobile device (e.g., mobile device 128 of FIG. 1) requesting to enroll as a station to the in-vehicle computing system's access point. At 606, the method includes storing the mobile device information and WIFI direct information in order to maintain persistent communication and allow for quick reconnection after the devices are disconnected. Storing the data at 606 allows the devices to reduce the amount of data transferred during subsequent WIFI direct communication setup routines.

At 608, the method includes exchanging Layer-2 and/or Layer-3 encryption and/or decryption information. For example, the sending device (e.g., the mobile device) may encrypt data sent via the WIFI direct connection using keys or other authentication devices. In order to decrypt the data, the receiving device (e.g., the in-vehicle computing device) may receive the keys or send the authentication information (e.g., information to confirm an identity/integrity of the device) from/to the sending device in order to allow the receiving device to decrypt the data. At 610, the method includes assigning an IP address to the mobile device. For example, the in-vehicle computing system may determine a subnet of the IP address used by the in-vehicle computing system, and select an IP address in the same subnet to assign (e.g., by sending an indication of the assigned IP address) to the mobile device.

At 612, the method includes determining the TCP/UDP role of the in-vehicle computing system as a sink. For example, the group owner may be automatically associated with a sink (e.g., while the group client is automatically associated with a source) in the configuration settings for the WIFI direct communication. Additionally or alternatively, the role may be determined based on the in-vehicle computing system receiving a request from the mobile device to synchronize data (e.g., phonebook data, as indicated at 614) with the mobile device. At 616, the method includes advertising or otherwise making the stored phonebook data of the in-vehicle computing system available to the mobile device in order to compare the phonebook data in both devices. In this way, differences between the phonebook data (e.g., vCards that are in one device but not the other, vCards that have been updated to include more, less, or different data, etc.) may be determined at the in-vehicle computing system and/or the mobile device. It is to be understood that the phonebook data stored at the in-vehicle computing system may be stored locally at the in-vehicle computing system or stored remotely from the in-vehicle computing system and accessible by the in-vehicle computing system via a network.

At 618, the method includes determining if the phonebook data is different between the two devices. If the phonebook data is not different (e.g., if there are no vCards that are stored at the mobile device but not stored at the in-vehicle computing system and/or if there are no vCards stored at the mobile device that include different information than associated vCards stored at the in-vehicle computing system [e.g., the vCards at the mobile device and the in-vehicle computing system are the same], "NO" at 618), the method proceeds to 620 to not synchronize and/or receive phonebook data at the in-vehicle computing system. If the phonebook data is different (e.g., if there are vCards that are stored in the mobile device but not stored at the in-vehicle computing system and/or if there are vCards stored at the mobile device that include different/updated information than associated vCards stored at the in-vehicle computing system, "YES" at 618), the method proceeds to 622 to determine whether vCards will be sent individually. For example, the mobile device may indicate whether the new/updated vCards will be sent individually or grouped together in (e.g., compressed) files and sent such that multiple vCards are sent at once/simultaneously/collectively.

If the vCards will not be sent individually (e.g., "NO" at 622), the method proceeds to 624 to receive new/updated vCards according to TCP. The vCards received at 624 may be received as (e.g., compressed) files including two or more vCards. If the vCards will be sent individually (e.g., "YES" at 622), the method proceeds to 626 to receive the new/updated vCards according to UDP. It is to be understood that only the changed/new data in a given vCard may be transmitted to the in-vehicle computing system from the mobile device, in order to further reduce bandwidth usage. In this way, if all data of a given vCard is the same in the in-vehicle computing system and the mobile device aside from a fax number, for example, the mobile device may only send the new/updated fax number along with an identifier for the vCard, rather than sending the entire vCard. In such an example, where portions of a vCard are sent individually, the data may be transmitted/received according to UDP. If the portions of the vCards are combined into a file having a size greater than a threshold (e.g., greater than the size of the largest vCard stored at the mobile device or larger an average vCard size), the file including portions of different vCards may be transmitted/received according to TCP.

By sending phonebook data or other synchronization via WIFI direct as described here, devices may take advantage of the increased data rate/interference avoidance of WIFI direct communications (e.g., relative to BLUETOOTH or NFC communications) and free up other wireless communication links for sending other data. The above-described systems and methods may also provide increased security and an improved user experience, relative to synchronizing data over other wireless communication protocols, by providing handshaking at both Layer-2 and Layer-3 of the OSI model for communication modules of the synchronized devices. For example, data may be encrypted at one or both of Layer-2 and Layer-3. The WIFI direct connection may also be configured at Layer-2 and Layer-3 by negotiating group owner/client at Layer-2 and assigning IP addresses and determining server/client roles at Layer-3. In this way, the data synchronization may be performed using an application framework that is portable across device platforms and operating systems.

The description of embodiments has been presented for purposes of illustration and description. Suitable modifications and variations to the embodiments may be performed in light of the above description or may be acquired from practicing the methods. For example, unless otherwise noted, one or more of the described methods may be performed by a suitable device and/or combination of devices, such as the in-vehicle computing system 109 and/or mobile device 128 described with reference to FIGS. 1 and 2. The methods may be performed by executing stored instructions with one or more logic devices (e.g., processors) in combination with one or more additional hardware elements, such as storage devices, memory, hardware network interfaces/antennas, switches, actuators, clock circuits, etc. The described methods and associated actions may also be performed in various orders in addition to the order described in this application, in parallel, and/or simultaneously. The described systems are exemplary in nature, and may include additional elements and/or omit elements. The subject matter of the present disclosure includes all novel and non-obvious combinations and sub-combinations of the various systems and configurations, and other features, functions, and/or properties disclosed.

As used in this application, an element or step recited in the singular and proceeded with the word "a" or "an" should be understood as not excluding plural of said elements or steps, unless such exclusion is stated. Furthermore, references to "one embodiment" or "one example" of the present disclosure are not intended to be interpreted as excluding the existence of additional embodiments that also incorporate the recited features. The terms "first," "second," and "third," etc. are used merely as labels, and are not intended to impose numerical requirements or a particular positional order on their objects. The following claims particularly point out subject matter from the above disclosure that is regarded as novel and non-obvious.

## Claims

1. An in-vehicle computin system of a vehicle (102), the in-vehicle computing system comprising:
z wireless communication interface;
a processor (214;220); and
a storage device (208;216);
storing instructions executable by the processor (214;220) to:
initiate a connection to a mobile device (242) over a WIFI direct communication link, the in-vehicle computing system being established as a group owner of the WIFI direct communication link and the mobile device (242) being established as a group client of the WIFI direct communication link;
assign an IP address to the mobile device (242) based on an IP address of the in-vehicle computing system;
identify the in-vehicle computing system as a sink for synchronization data communicated over the WIFI direct communication link; and
selectively receive the synchronization data from the mobile device (242) over the WIFI direct communication link in accordance with transmission control protocol (TCP) or user datagram protocol (UDP) based on an amount or format of the synchronization data to be transmitted.

2. The in-vehicle computing system of claim 1, wherein the instructions are further executable to broadcast WIFI management frames advertising the in-vehicle computing system as an access point for the WIFI direct communication link, the in-vehicle computing system being established as a group owner based on the broadcast WIFI management frames.

3. The in-vehicle computing system of claim 1 or 2, wherein the instructions are further executable to negotiate a group owner for the WIFI direct communication link, the in-vehicle computing system being established as a group owner based on information exchanged during the negotiation.

4. The in-vehicle computing system of one of claims 1 to 3, wherein the synchronization data comprises phonebook data stored in the mobile device (242) as one or more vCards, and/or wherein selectively receiving the synchronization data over the WIFI direct communication link in accordance with TCP or UDP comprises receiving vCards in accordance with TCP when a plurality of vCards are grouped in a file and sent over the WIFI direct communication link collectively and receiving vCards in accordance with UDP when the vCards are sent over the WIFI direct communication link individually.

5. The in-vehicle computing system of claim 4, wherein the instructions are further executable to advertise phonebook data of the in-vehicle computing system to the mobile device (242) in order to identify differences between the phonebook data of the in-vehicle computing system and the phonebook data stored in the mobile device (242), and/or wherein selectively receiving the synchronization data from the mobile device (242) comprises receiving only:
vCards from the mobile device (242) that include different data than corresponding vCards of the in-vehicle computing system, and
vCards from the mobile device(242) that are not present in the phonebook data of the in-vehicle computing system.

6. The in-vehicle computing system of one of claims 1 to 5, wherein the instructions are further executable to select the IP address assigned to the mobile device (242) to be within a same subnet as the IP address of the in-vehicle computing system, and/or wherein the instructions are further executable to transmit and/or receive data via a different communication link from the WIFI direct communication link while receiving the synchronization data.

7. The in-vehicle computing system of claim 6, wherein the different communication link comprises one or more of a Bluetooth communication link and a near-field communication (NFC) communication link.

8. The vehicle computing system of one of claims 1 to 7, wherein the instructions are further executable to decrypt the received synchronization data, the synchronization data being encrypted according to one or more of a Layer-2 protocol and a Layer-3 protocol of an Open Systems Interconnection (OSI) model.

9. A mobile computing device comprising:
a wireless communication interface;
a processor (214;220); and
a storage device (208;216); storing phonebook data as a plurality of vCards, and storing instructions executable by the processor (214;220) to:
request to connect to a remote computing device via a WIFI direct communication link;
encrypt at least a portion of the phonebook data according to one or more of Layer-2 protocol and a Layer-3 protocol of an Open Systems Interconnection (OSI) model;
negotiate to identify which of the remote computing device and the mobile computing device is to provide a group owner to serve as an access point for the WIFI direct communication link;
responsive to determining that the remote computing device provides the group owner, receive an IP address assignment from the remote computing device;
for each of the plurality of vCards that are to be transmitted individually, transmitting that vCard to the remote computing device according to user datagram protocol (UDP); and
for each of the plurality of vCards that are to be transmitted collectively as a file, transmitting that file to the remote computing device according to transmission control protocol (TCP).

10. The mobile computing device of claim 9, wherein the instructions are further executable to determine differences between the phonebook data stored at the mobile computing device and corresponding phonebook data of the remote computing device, and only transmit vCards of the phonebook data stored at the mobile computing device that are not included in the phonebook data of the remote computing device or are different than a corresponding vCard of the phonebook data of the remote computing device.

11. The mobile computing device of claims 9 or 10, wherein the remote computing device is a first remote computing device, and wherein the instructions are further executable to establish a wireless connection with a second remote computing device and transmit data to the second remote computing device via the wireless connection while simultaneously transmitting the phonebook data to the first remote computing device.

12. The mobile computing device of claim 11, wherein the wireless connection with the second remote computing device comprises a Bluetooth or near-field communication (NFC) communication link, and/or wherein the wireless connection with the second remote computing device comprises a WIFI direct communication link.

13. The mobile computing device of one of claims 9 to 12, wherein the instructions are further executable to send additional data other than the phonebook data to the in-vehicle computing system via the WIFI direct communication link or an additional WIFI direct communication link while simultaneously transmitting the phonebook data to the in-vehicle computing system via the WIFI direct communication link, and/or wherein the instructions are further executable to store device information regarding the remote computing device and connection information regarding the WIFI direct communication link for performing a automated reconnect during subsequent data synchronizations.

14. A method of synchronizing phonebook data between a first device and a second device, the method comprising:
establishing a connection between the first device and the second device over a WIFI direct communication link;
determining if one of the first device and the second device transmitted a beacon advertising an access point provided by the one of the first device and the second device;
if one of the first device and the second device transmitted the beacon, identifying the one of the first device and the second device as the access point for the WIFI direct communication link;
if neither or both of the first device and the second device transmitted the beacon, negotiating which device is identified as the access point according to a protocol of Layer-2 of an Open Systems Interconnection (OSI) model of the first and second devices;
assigning, by the device identified as the access point, an IP address for the device not identified as the access point;
determining whether the phonebook data is to be sent as individual vCards or as one or more files including a plurality of vCards;
communicating the phonebook data across the WIFI direct communication link using UDP if the phonebook data is to be sent as individual vCards; and
communicating the phonebook data across the WIFI direct communication link using TDP if the phonebook data is to be sent as one or more files including a plurality of vCards.

15. The method of claim 14, further comprising comparing phonebook data of the first device to the phonebook data of the second device and only communicating differences between the phonebook data of the first and second devices.

## Patentansprüche

1. Fahrzeuginternes Rechensystem eines Fahrzeugs (102), das fahrzeuginterne Rechensystem umfassend:
eine drahtlose Kommunikationsschnittstelle;
einen Prozessor (214; 220); und
eine Speichervorrichtung (208; 216);
die Anweisungen speichert, die vom Prozessor (214; 220) ausführbar sind, um:
eine Verbindung zu einer mobilen Vorrichtung (242) über eine WIFI-Direktkommunikationsverbindung aufzubauen, wobei das fahrzeuginterne Rechensystem als ein Gruppeneigentümer der WIFI-Direktkommunikationsverbindung festgelegt wird und die mobile Vorrichtung (242) als ein Gruppenclient der WIFI-Direktkommunikationsverbindung festgelegt wird;
einer mobilen Vorrichtung (242) eine IP-Adresse auf Grundlage einer IP-Adresse des fahrzeuginternen Rechensystems zuzuweisen;
das fahrzeuginterne Rechensystem als eine Senke für Synchronisationsdaten zu identifizieren, die über die WIFI-Direktkommunikationsverbindung kommuniziert werden; und
die Synchronisationsdaten von der mobilen Vorrichtung (242) über die WIFI-Direktkommunikationsverbindung gemäß dem Übertragungssteuerungsprotokoll (transmission control protocol - TCP) oder dem Benutzerdatagrammprotokoll (user datagram protocol - UDP) auf Grundlage einer Menge oder eines Formats der zu übertragenden Synchronisationsdaten selektiv zu empfangen.

2. Fahrzeuginternes Rechensystem nach Anspruch 1, wobei die Anweisungen ferner ausführbar sind, um WIFI-Verwaltungsrahmen auszustrahlen, die das fahrzeuginterne Rechensystem als einen Accesspoint für die WIFI-Direktkommunikationsverbindung bewerben, wobei das fahrzeuginterne Rechensystem als ein Gruppenbesitzer auf Grundlage der ausgestrahlten WIFI-Verwaltungsrahmen festgelegt wird.

3. Fahrzeuginternes Rechensystem nach Anspruch 1 oder 2, wobei die Anweisungen ferner ausführbar sind, um einen Gruppenbesitzer für die WIFI-Direktkommunikationsverbindung auszuhandeln, wobei das fahrzeuginterne Rechensystem als ein Gruppenbesitzer auf Grundlage von Informationen festgelegt wird, die während der Aushandlung ausgetauscht werden.

4. Fahrzeuginternes Rechensystem nach einem der Ansprüche 1 bis 3, wobei die Synchronisationsdaten Telefonbuchdaten umfassen, die in der mobilen Vorrichtung (242) als eine oder mehrere vCards gespeichert sind, und/oder wobei selektives Empfangen der Synchronisationsdaten über die WIFI-Direktkommunikationsverbindung gemäß TCP oder UDP Empfangen von vCards gemäß TCP, wenn eine Mehrzahl von vCards in einer Datei gruppiert und über die WIFI-Direktkommunikationsverbindung gemeinsam versendet werden, und Empfangen von vCards gemäß UDP umfasst, wenn die vCards über die WIFI-Direktkommunikationsverbindung einzeln versendet werden.

5. Fahrzeuginternes Rechensystem nach Anspruch 4, wobei die Anweisungen ferner ausführbar sind, um Telefonbuchdaten des fahrzeuginternen Rechensystems bei der mobilen Vorrichtung (242) zu bewerben, um Unterschiede zwischen den Telefonbuchdaten des fahrzeuginternen Rechensystems und der Telefonbuchdaten zu identifizieren, die in der mobilen Vorrichtung (242) gespeichert sind, und/oder wobei selektives Empfangen der Synchronisationsdaten von der mobilen Vorrichtung (242) Empfangen von lediglich Folgendem umfasst:
vCards von der mobilen Vorrichtung (242), die verschiedene Daten als entsprechende vCards des fahrzeuginternen Rechensystems beinhalten, und
vCards von der mobilen Vorrichtung (242), die nicht in den Telefonbuchdaten des fahrzeuginternen Rechensystems vorhanden sind.

6. Fahrzeuginternes Rechensystem nach einem der Ansprüche 1 bis 5, wobei die Anweisungen ferner ausführbar sind, um die IP-Adresse auszuwählen, die der mobilen Vorrichtung (242) zugewiesen wurde, um innerhalb eines gleichen Subnetzes wie die IP-Adresse des fahrzeuginternen Rechensystems zu sein, und/oder wobei die Anweisungen ferner ausführbar sind, um Daten über eine von der WIFI-Direktkommunikationsverbindung verschiedene Kommunikationsverbindung zu übertragen und/oder zu empfangen, während die Synchronisationsdaten empfangen werden.

7. Fahrzeuginternes Rechensystem nach Anspruch 6, wobei die verschiedene Kommunikationsverbindung eine oder mehrere von einer Bluetoothkommunikationsverbindung und einer Nahfeldkommunikations-(near-field communication - NFC)-Kommunikationsverbindung umfasst.

8. Fahrzeugrechensystem nach einem der Ansprüche 1 bis 7, wobei die Anweisungen ferner ausführbar sind, um die empfangenen Synchronisationsdaten zu entschlüsseln, wobei die Synchronisationsdaten über eines oder mehrere von einem Schicht-2-Protokoll und einem Schicht-3-Protokoll eines Open Systems Interconnection (OSI)-Modells verschlüsselt werden.

9. Mobile Rechenvorrichtung, umfassend:
eine drahtlose Kommunikationsschnittstelle;
einen Prozessor (214; 220); und
eine Speichervorrichtung (208; 216);
die Telefonbuchdaten als eine Mehrzahl von vCards speichert und Anweisungen speichert, die durch den Prozessor (214; 220) ausführbar sind, um:
das Verbinden mit einer entfernten Rechenvorrichtung über eine WIFI-Direktkommunikationsverbindung anzufordern;
mindestens einen Abschnitt der Telefonbuchdaten gemäß einem oder mehreren von Schicht-2-Protokoll und einem Schicht-3-Protokoll eines Open Systems Interconnection (OSI)-Modells zu verschlüsseln;
das Identifizieren auszuhandeln, welches von der entfernten Rechenvorrichtung und der mobilen Rechenvorrichtung einen Gruppenbesitzer bereitstellen soll, um als ein Accesspoint für die WIFI-Direktkommunikationsverbindung zu dienen;
als Reaktion auf das Bestimmen, dass die entfernte Rechenvorrichtung den Gruppenbesitzer bereitstellt, eine IP-Adresszuweisung von der entfernten Rechenvorrichtung zu empfangen;
für jede der Mehrzahl von vCards, die einzeln übertragen werden sollen, diese vCard an die entfernte Rechenvorrichtung gemäß dem Benutzerdatagrammprotokoll (UDP) zu übertragen; und
für jede der Mehrzahl von vCards, die gruppiert als eine Datei übertragen werden sollen, diese Datei an die entfernte Rechenvorrichtung gemäß dem Übertragungssteuerungsprotokoll (TCP) zu übertragen.

10. Mobile Rechenvorrichtung nach Anspruch 9, wobei die Anweisungen ferner ausführbar sind, um Unterschiede zwischen den Telefonbuchdaten, die in der mobilen Rechenvorrichtung gespeichert wurden, und entsprechende Telefonbuchdaten der entfernten Rechenvorrichtung zu bestimmen, und lediglich vCards der Telefonbuchdaten, die in der mobilen Rechenvorrichtung gespeichert sind, zu übertragen, die nicht in den Telefonbuchdaten der entfernten Rechenvorrichtung beinhaltet sind oder die von einer entsprechenden vCard der Telefonbuchdaten der entfernten Rechenvorrichtung verschieden sind.

11. Mobile Rechenvorrichtung nach den Ansprüchen 9 oder 10, wobei die entfernte Rechenvorrichtung eine erste entfernte Rechenvorrichtung ist, und wobei die Anweisungen ferner ausführbar sind, um eine drahtlose Verbindung zu einer zweiten entfernten Rechenvorrichtung aufzubauen und Daten an die zweite entfernte Rechenvorrichtung über die drahtlose Verbindung zu übertragen, während gleichzeitig die Telefonbuchdaten der ersten entfernten Rechenvorrichtung übertragen werden.

12. Mobile Rechenvorrichtung nach Anspruch 11, wobei die drahtlose Verbindung zu der zweiten entfernten Rechenvorrichtung eine Bluetooth- oder Nahfeldkommunikations-(NFC)-Kommunikationsverbindung umfasst, und/oder wobei die drahtlose Verbindung zu der zweiten entfernten Rechenvorrichtung eine WIFI-Direktkommunikationsverbindung umfasst.

13. Mobile Rechenvorrichtung nach einem der Ansprüche 9 bis 12, wobei die Anweisungen ferner ausführbar sind, um zusätzliche Daten, die ungleich den Telefonbuchdaten sind, an das fahrzeuginterne Rechensystem über die WIFI-Direktkommunikationsverbindung oder eine zusätzliche WIFI-Direktkommunikationsverbindung zu versenden, während gleichzeitig die Telefonbuchdaten an das fahrzeuginterne Rechensystem über die WIFI-Direktkommunikationsverbindung übertragen werden, und/oder wobei die Anweisungen ferner ausführbar sind, um Vorrichtungsinformationen in Bezug auf die entfernte Rechenvorrichtung und Verbindungsinformationen in Bezug auf die WIFI-Direktkommunikationsverbindung zum Durchführen eines automatischen Wiederverbindens während nachfolgender Datensynchronisationen zu speichern.

14. Verfahren zum Synchronisieren von Telefonbuchdaten zwischen einer ersten Vorrichtung und einer zweiten Vorrichtung, das Verfahren umfassend:
Aufbauen einer Verbindung zwischen der ersten Vorrichtung und der zweiten Vorrichtung über eine WIFI-Direktkommunikationsverbindung;
Bestimmen, ob eine der ersten Vorrichtung und der zweiten Vorrichtung einen Beacon übertragen hat, der einen Accesspoint bewirbt, der durch eine von der ersten Vorrichtung und der zweiten Vorrichtung bereitgestellt wird;
wenn eine von der ersten Vorrichtung und der zweiten Vorrichtung den Beacon übertragen hat, Identifizieren der einen von der ersten Vorrichtung und der zweiten Vorrichtung als der Accesspoint für die WIFI-Direktkommunikationsverbindung;
wenn keine oder beide der ersten Vorrichtung und der zweiten Vorrichtung den Beacon übertragen haben, Aushandeln, welche Vorrichtung als der Accesspoint gemäß einem Schicht-2-Protokoll eines Open Systems Interconnection (OSI)-Modells der ersten und zweiten Vorrichtung identifiziert wird;
Zuweisen, durch die Vorrichtung, die als der Accesspoint identifiziert wurde, einer IP-Adresse für die Vorrichtung, die nicht als Accesspoint identifiziert wurde;
Bestimmen, ob die Telefonbuchdaten als einzelne vCards oder als eine oder mehrere Dateien versendet werden sollen, die eine Mehrzahl von vCards beinhalten;
Kommunizieren der Telefonbuchdaten über die WIFI-Direktkommunikationsverbindung unter Verwendung von UDP, wenn die Telefonbuchdaten als einzelne vCards versendet werden sollen; und
Kommunizieren der Telefonbuchdaten über die WIFI-Direktkommunikationsverbindung unter Verwendung von TDP, wenn die Telefonbuchdaten als eine oder mehrere Dateien versendet werden sollen, die eine Mehrzahl von vCards beinhalten.

15. Verfahren nach Anspruch 14, ferner umfassend Vergleichen von Telefonbuchdaten der ersten Vorrichtung mit den Telefonbuchdaten der zweiten Vorrichtung und lediglich Kommunizieren von Unterschieden zwischen den Telefonbuchdaten der ersten und zweiten Vorrichtung.

## Revendications

1. Système informatique de bord d'un véhicule (102), le système informatique de bord comprenant :
une interface de communication sans fil ;
un processeur (214 ; 220) ; et
un dispositif de stockage (208 ; 216) ;
stockant des instructions exécutables par le processeur (214 ; 220) pour :
lancer une connexion avec un dispositif mobile (242) sur une liaison de communication directe par WiFi, le système informatique de bord étant établi comme un groupe propriétaire de la liaison de communication directe par WiFi et le dispositif mobile (242) étant établi comme un groupe client de la liaison de communication directe par WiFi ;
affecter une adresse IP au dispositif mobile (242) sur la base d'une adresse IP du système informatique de bord ;
identifier le système informatique de bord comme un collecteur pour des données de synchronisation communiquées sur la liaison de communication directe par WiFi ; et
recevoir sélectivement les données de synchronisation du dispositif mobile (242) sur la liaison de communication directe par WiFi conformément à un protocole de contrôle de transmission (TCP) ou à un protocole de datagramme utilisateur (UDP) sur la base d'une quantité ou d'un format des données de synchronisation à transmettre.

2. Système informatique de bord selon la revendication 1, dans lequel les instructions sont exécutables en outre pour diffuser des trames de gestion WiFi indiquant le système informatique de bord comme un point d'accès pour la liaison de communication directe par WiFi, le système informatique de bord étant établi comme un groupe propriétaire sur la base des trames de gestion WiFi diffusées.

3. Système informatique de bord selon les revendications 1 ou 2, dans lequel les instructions sont exécutables en outre pour négocier un groupe propriétaire pour la liaison de communication directe par WiFi, le système informatique de bord étant établi comme un groupe propriétaire sur la base d'informations échangées lors de la négociation.

4. Système informatique de bord selon l'une des revendications 1 à 3, dans lequel les données de synchronisation comprennent des données de répertoire téléphonique stockées dans le dispositif mobile (242) sous la forme d'une ou de plusieurs vCards (cartes de visite), et/ou dans lequel la réception sélective des données de synchronisation sur la liaison de communication directe par WiFi conformément à TCP ou UDP comprend la réception de vCards conformément à TCP lorsqu'une pluralité de vCards sont regroupées dans un fichier et envoyées sur la liaison de communication directe par WiFi collectivement et la réception de vCards conformément à UDP lorsque les vCards sont envoyées sur la liaison de communication directe par WiFi individuellement.

5. Système informatique de bord selon la revendication 4, dans lequel les instructions sont exécutables en outre pour indiquer des données de répertoire téléphonique du système informatique de bord au dispositif mobile (242) afin d'identifier des différences entre les données de répertoire téléphonique du système informatique de bord et les données de répertoire téléphonique stockées dans le dispositif mobile (242), et/ou dans lequel la réception sélective des données de synchronisation du dispositif mobile (242) comprend la réception uniquement : de vCards provenant du dispositif mobile (242) qui incluent des données différentes de celles de vCards correspondantes du système informatique de bord, et
de vCards provenant du dispositif mobile(242) qui ne figurent pas dans les données de répertoire téléphonique du système informatique de bord.

6. Système informatique de bord selon l'une des revendications 1 à 5, dans lequel les instructions sont exécutables en outre pour sélectionner l'adresse IP affectée au dispositif mobile (242) pour être dans un même sous-réseau que l'adresse IP du système informatique de bord, et/ou dans lequel les instructions sont exécutables en outre pour transmettre et/ou recevoir des données via une liaison de communication différente de la liaison de communication directe par WiFi pendant la réception des données de synchronisation.

7. Système informatique de bord selon la revendication 6, dans lequel la liaison de communication différente comprend une ou plusieurs parmi une liaison de communication Bluetooth et une liaison de communication de type communication en champ proche (NFC).

8. Système informatique de véhicule selon l'une des revendications 1 à 7, dans lequel les instructions sont exécutables en outre pour déchiffrer les données de synchronisation reçues, les données de synchronisation étant chiffrées selon un ou plusieurs parmi un protocole de couche 2 et un protocole de couche 3 d'un modèle d'interconnexion des systèmes ouverts (OSI).

9. Dispositif informatique mobile comprenant :
une interface de communication sans fil ;
un processeur (214 ; 220) ; et
un dispositif de stockage (208 ; 216) ;
stockant des données de répertoire téléphonique sous la forme d'une pluralité de vCards, et stockant des instructions exécutables par le processeur (214 ; 220) pour :
demander d'être connecté à un dispositif informatique distant via une liaison de communication directe par WiFi ;
chiffrer au moins une partie des données de répertoire téléphonique selon un ou plusieurs parmi un protocole de couche 2 et un protocole de couche 3 d'un modèle d'interconnexion des systèmes ouverts (OSI) ;
négocier pour identifier lequel du dispositif informatique distant et du dispositif informatique mobile doit fournir un groupe propriétaire destiné à servir de point d'accès pour la liaison de communication directe par WiFi ;
en réponse au fait de déterminer que le dispositif informatique distant fournit le groupe propriétaire, recevoir une affectation d'adresse IP du dispositif informatique distant ;
pour chacune de la pluralité de vCards qui sont à transmettre individuellement, transmettre la vCard en question au dispositif informatique distant selon un protocole de datagramme utilisateur (UDP) ; et
pour chacune de la pluralité de vCards qui sont à transmettre collectivement sous forme de fichier, transmettre le fichier en question au dispositif informatique distant selon un protocole de contrôle de transmission (TCP).

10. Dispositif informatique mobile selon la revendication 9, dans lequel les instructions sont exécutables en outre pour déterminer des différences entre les données de répertoire téléphonique stockées au niveau du dispositif informatique mobile et des données de répertoire téléphonique correspondantes du dispositif informatique distant, et transmettre uniquement les vCards des données de répertoire téléphonique stockées au niveau du dispositif informatique mobile qui ne sont pas incluses dans les données de répertoire téléphonique du dispositif informatique distant ou sont différentes d'une vCard correspondante des données de répertoire téléphonique du dispositif informatique distant.

11. Dispositif informatique mobile selon les revendications 9 ou 10, dans lequel le dispositif informatique distant est un premier dispositif informatique distant, et dans lequel les instructions sont exécutables en outre pour établir une connexion sans fil avec un second dispositif informatique distant et transmettre des données au second dispositif informatique distant via la connexion sans fil tout en transmettant simultanément les données de répertoire téléphonique au premier dispositif informatique distant.

12. Dispositif informatique mobile selon la revendication 11, dans lequel la connexion sans fil avec le second dispositif informatique distant comprend une liaison de communication Bluetooth ou de type communication en champ proche (NFC), et/ou dans lequel la connexion sans fil avec le second dispositif informatique distant comprend une liaison de communication directe par WiFi.

13. Dispositif informatique mobile selon l'une des revendications 9 à 12, dans lequel les instructions sont exécutables en outre pour envoyer des données supplémentaires autres que les données de répertoire téléphonique au système informatique de bord via la liaison de communication directe par WiFi ou une liaison supplémentaire de communication directe par WiFi tout en transmettant simultanément les données de répertoire téléphonique au système informatique de bord via la liaison de communication directe par WiFi, et/ou dans lequel les instructions sont exécutables en outre pour stocker des informations de dispositif concernant le dispositif informatique distant et des information de connexion concernant la liaison de communication directe par WiFi pour effectuer une reconnexion automatique pendant des synchronisations de données ultérieures.

14. Procédé de synchronisation de données de répertoire téléphonique entre un premier dispositif et un second dispositif, le procédé comprenant :
l'établissement d'une connexion entre le premier dispositif et le second dispositif sur une liaison de communication directe par WiFi ;
le fait de déterminer si l'un du premier dispositif et du second dispositif a transmis une balise indiquant un point d'accès fourni par l'un du premier dispositif et du second dispositif ;
si l'un du premier dispositif et du second dispositif a transmis la balise, l'identification de l'un du premier dispositif et du second dispositif comme le point d'accès pour la liaison de communication directe par WiFi ;
si ni l'un ni l'autre du premier dispositif et du second dispositif n'a transmis la balise ou si les deux l'ont transmise, le fait de négocier quel dispositif est identifié comme le point d'accès selon un protocole de couche 2 d'un modèle d'interconnexion des systèmes ouverts (OSI) des premier et second dispositifs ;
l'affectation, par le dispositif identifié comme le point d'accès, d'une adresse IP pour le dispositif non identifié comme le point d'accès ;
le fait de déterminer si les données de répertoire téléphonique doivent être envoyées sous forme de vCards individuelles ou sous la forme d'un ou de plusieurs fichiers incluant une pluralité de vCards ;
la communication des données de répertoire téléphonique sur la liaison de communication directe par WiFi au moyen d'UDP si les données de répertoire téléphonique doivent être envoyées sous forme de vCards individuelles ; et
la communication des données de répertoire téléphonique sur la liaison de communication directe par WiFi au moyen de TDP si les données de répertoire téléphonique doivent être envoyées sous la forme d'un ou de plusieurs fichiers incluant une pluralité de vCards.

15. Procédé selon la revendication 14, comprenant en outre la comparaison de données de répertoire téléphonique du premier dispositif aux données de répertoire téléphonique du second dispositif et la communication uniquement des différences entre les données de répertoire téléphonique des premier et second dispositifs.
